**Europäisches Patentamt**

**European Patent Office**

**Office européen des brevets**

(11) Veröffentlichungsnummer: **0 122 338**
**A1**

(12) **EUROPÄISCHE PATENTANMELDUNG**

(21) Anmeldenummer: **83201282.7**

(22) Anmeldetag: **06.09.83**

(51) Int. Cl.³: **A 01 K 31/06**

(30) Priorität: **07.04.83 DE 3312474**

(43) Veröffentlichungstag der Anmeldung:
**24.10.84 Patentblatt 84/43**

(84) Benannte Vertragsstaaten:
**IT**

(71) Anmelder: **Josef Voss Duett-Werk GmbH & Co.**
**Cäcilienstrasse 11-15**
**D-5760 Arnsberg 1(DE)**

(72) Erfinder: **Voss, Josef**
**Haus Dreizehneichen**
**D-5760 Arnsberg 1(DE)**

(72) Erfinder: **Thévenot, Gilles**
**Schlossbergstrasse 2**
**D-5770 Baden-Baden(DE)**

(74) Vertreter: **Fritz, Herbert, Dipl.-Ing.**
**Mühlenberg 74**
**D-5760 Arnsberg 1(DE)**

(54) **Aus Drahtgitterteilen zusammensetzbarer Vogelkäfig-Drahtkorb.**

㉗ Der Vogelkäfig-Drahtkorb ist aus Drahtgitterteilen zusammensetzbar, und zwar aus zwei einander gegenüberliegenden ebenen Wänden (1), aus zwei gekrümmten oder abgewinkelten Wänden (2) und aus einem gekrümmten oder abgewinkelten Dach (3). Die Wände sind untereinander mit einzelnen verbindungsteilen (20) aus Kunststoff verbunden, mit je einer einen Draht der Wand umfassenden Nut mit Einrastöffnung. Für die Verbindung des Daches mit einer gekrümmten Wand ist jeweils ein Schulterteil (10) aus einem vollwandigen Kunststoff vorgesehen mit einem Rand (11), an den das Dach angeschlossen ist, und mit einem Rand (14), an dem die gekrümmte Seitenwand angeschlossen ist. Im Bereich dieses Randes sind mehrere Verbindungselemente angeformt, mit je einer Nut, – die einem Draht aufnimmt, – und mit einer nach unten gerichteten Einrastöffnung zum Einrasten. Die Einzelteile können in einem flachen Karton versandt werden. Der Benutzer des Käfigs kann sie in einfacher Weise zu einem stabilen Korpus zusammensetzen.

EP 0 122 338 A1

./...

Fig. 1

- 1 -

Firma
Josef Voss
DUETT-Werk GmbH & Co.
Cäcilienstraße 11-15

5760 Arnsberg 1

==================================================================
"Aus Drahtgitterteilen zusammensetzbarer
Vogelkäfig-Drahtkorb"
==================================================================

Die Erfindung bezieht sich auf einen Vogelkäfig-Drahtkorb, welchen der Benutzer selbst zusammensetzt, nachdem er die Einzelteile zusammen mit der Schale, die das
Käfigunterteil bildet, in einem flachen Karton erhalten
hat.

Vogelkäfig-Drahtkörbe dieser Art sind schon in verschiedenen Ausführungen aus Patentschriften Stand der
Technik geworden, wie sie im folgenden angegeben sind,
doch konnte keine dieser bekannten Ausführungen auf dem
Mart Fuß fassen. Der Grund dafür ist, daß bei den bekannten Ausführungen die Verbindungselemente der Drahtgitter so umständlich sind, sodaß ihre Handhabung einem
Nichtfachmann nicht zugemutet werden kann, oder daß die
Stabilität des zusammengesetzten Drahtkorbes zu wünschen übrig läßt. Es wird folgender Stand der Technik
genannt:

DE-OS  26 50 901      US-PS 3 223 274
US-PS 3 352 287       US-PS 3 742 909
FR-PS 76 09 421

- 2 -

Die Aufgabe der Erfindung besteht in der Entwicklung eines marktgerechten Vogelkäfig-Drahtkorbes der genannten Art.

Die Lösung ergibt sich aus den Merkmalen der Patentansprüche.

Für die Unterbringung der Einzelteile eines solchen Drahtkorbes genügt im wesentlichen der Raum der Kunststoffschale. Die Verpackung braucht somit im wesentlichen nur für die Größe der Schale bemessen zu sein. Wenn der Benutzer die Einzelteile des Drahtkorbes erhalten hat, verbindet er die Gitterteile der Wände an der lotrechten Fuge miteinander mit Hilfe der einzelnen Verbindungsteile aus Kunststoff. Dies geschieht einfach, indem der randseitige Draht des jeweiligen Gitterteiles in die am Verbindungsteil vorgesehene Nut eingedrückt wird. Die beiden Schulterteile können bereits mit dem Gitterteil für das Dach verbunden geliefert werden. Der Benutzer braucht dann nur noch eine Verbindung der Schulterteile mit den gekrümmten oder abgewinkelten Seitenteilen herzustellen, was wiederum durch Eindrücken des randseitigen Drahtes in die angeformten Verbindungselemente geschieht.

Es ergibt sich ein stabiler Korpus, weil die angeformten oder einzelnen Verbindungsteile aus Kunststoff die Drähte toleranzfrei festhalten. Einen wesentlichen Beitrag zur Stabilität tragen die Schulterteile aus vollwandigem Kunststoff bei; insbesondere da sie konkav gekrümmt, also in drei Dimensionen ausgesteift sind.

Die Drahtgitterteile können aus rechteckigen oder quadratischen Drahtmatten wirtschaftlich hergestellt werden. Sonderausführungen sind nicht erforderlich.

Es sind folgende bevorzugte Ausführungsformen der Erfindung vorgesehen: Auch die Verbindung zwischen den Schulterteilen und dem Dach kann durch angeformte aufsteckbare Verbindungsteile erfolgen. Wenn die jeweiligen Nutöffnungen der angeformten Verbindungsteile nach unten gerichtet sind, so läßt sich die Verbindung durch Aufdrücken des Schulterteiles auf das lotrecht aufgestellte Gitterteil durchführen. Durch weitere angeformte Elemente kann die Stabilität vergrößert werden. Die an die Schulterteile anschließenden Gitterteile können gewölbt oder abgewinkelt sein. Man kann sie auch mehrteilig ausführen, wobei die Verbindung jeweils durch einzelne Verbindungsteile nach der Erfindung hergestellt wird. Nach der Erfindung läßt sich jeder beliebige Käfiggrundriß aufbauen. Die angeformten Verbindungsteile sind bevorzugt so ausgeführt, daß die Verbindung durch Eindrücken des Drahtes leicht hergestellt werden kann, daß jedoch das wieder Herausziehen des Drahtes erschwert ist.

Im folgenden werden Ausführungsbeispiele der Erfindung näher beschrieben unter Bezugnahme auf die Zeichnungen.

Fig. 1    zeigt perspektivisch einen zusammengesetzten Vogelkäfig-Drahtkorb nach der Erfindung;

Fig. 2    stellt ein Schulterteil dieses Drahtkorbes dar, von unten gesehen;

Fig. 3    ist eine Ansicht dieses Schulterteiles in Richtung des Pfeiles III von Fig. 2;

Fig. 4    ist ein Schnitt nach IV von Fig. 2;

Fig. 5    ist ein Schnitt nach V von Fig. 3;

Fig. 6    ist ein Schnitt gemäß VI von Fig. 3;

Fig. 7    ist ein Schnitt nach VII von Fig. 3;

Fig. 8    ist ein Schnitt nach VIII von Fig. 3;

- 4 -

Fig. 9    ist eine Draufsicht auf ein einzelnes
          Verbindungsteil;

Fig. 10   ist ein Schnitt nach X-X von Fig. 9;

Fig. 11   ist ein Schnitt nach XI-XI von Fig. 9;

Fig. 12   stellt perspektivisch eine weitere
          Ausführungsform eines Drahtkorbes nach
          der Erfindung dar.

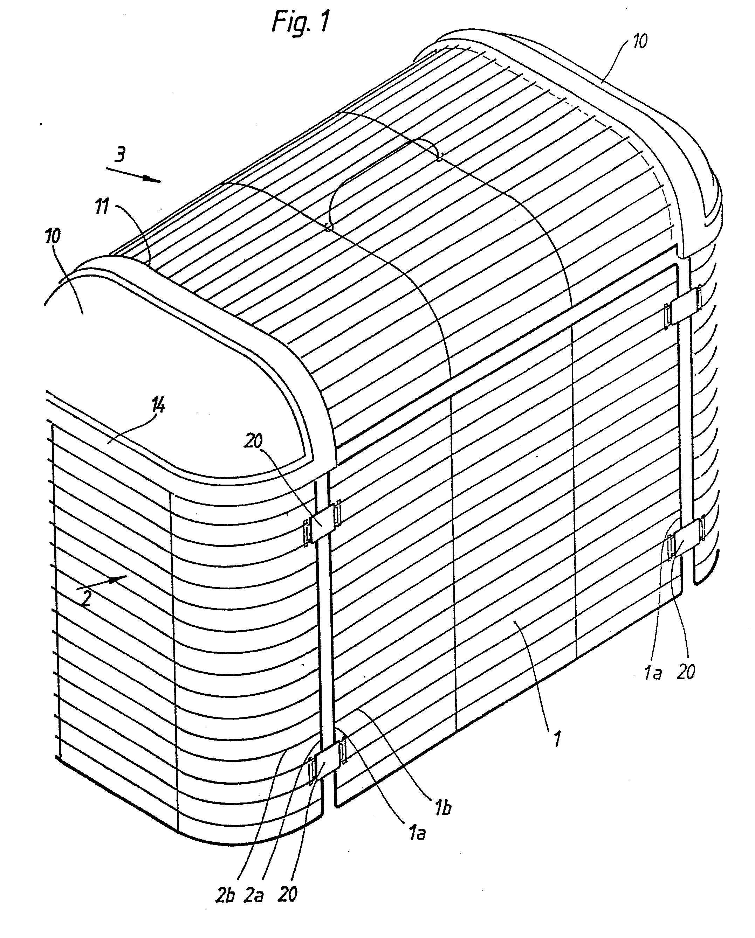

Zunächst wird Figur 1 beschrieben. Der dargestellte
Drahtkorb bildet den Oberteil eines Vogelkäfigs. Der
Unterteil wird durch eine nicht dargestellte Schale aus
Kunststoff gebildet, wie an sich bekannt, die mit leicht
lösbaren Verbindungsmitteln mit dem Drahtkorb verbunden
wird.

Der Drahtkorb ist aus fünf Drahtgitterteilen und aus
zwei Schulterteilen 10 zusammengesetzt. Es sind dies
die beiden ebenen Gitterteile 1 von einer rechteckigen
oder quadratischen Form, und die beiden gewölbten Gitterteile 2. An jeder Seite ist ein Gitterteil 1 und ein
Gitterteil 2 mit zwei einzelnen Verbindungsteilen 20
verbunden. Das Gitterteil 3, welches das Dach bildet,
ist gewölbt. Die Verbindung zwischen dem Teil 3 und
den einander gegenüberliegenden Teilen 2 wird jeweils
durch ein Schulterteil 10 aus Kunststoff hergestellt.
Dieses Schulterteil ist mit einem umlaufenden Rand versehen und zwar mit einem dachseitigen Rand 11 und mit
einem seitlichen Rand 14. Die Ränder sind jeweils in
ihrer Form dem Dach bzw. dem Gitterteil 2 angepaßt.
Der Rand ist jeweils mit dem zugeordneten Gitterteil
verbunden.

Die ebenen Gitterteile 1 sind an den lotrechten Rändern jeweils durch Drähte 1a begrenzt, an welche rechtwinklig dünnere Drähte 1b angeschlossen sind. In der gleichen Weise sind die Gitterteile 2 seitlich durch die Drähte 2a und oben durch die Drähte 2c begrenzt, an welche sich die dünneren Drähte 2b anschließen. Ebenfalls ist das Dach 3 seitlich durch stärkere Drähte begrenzt und zwar an der gekrümmten Seite durch einen Draht 3a.

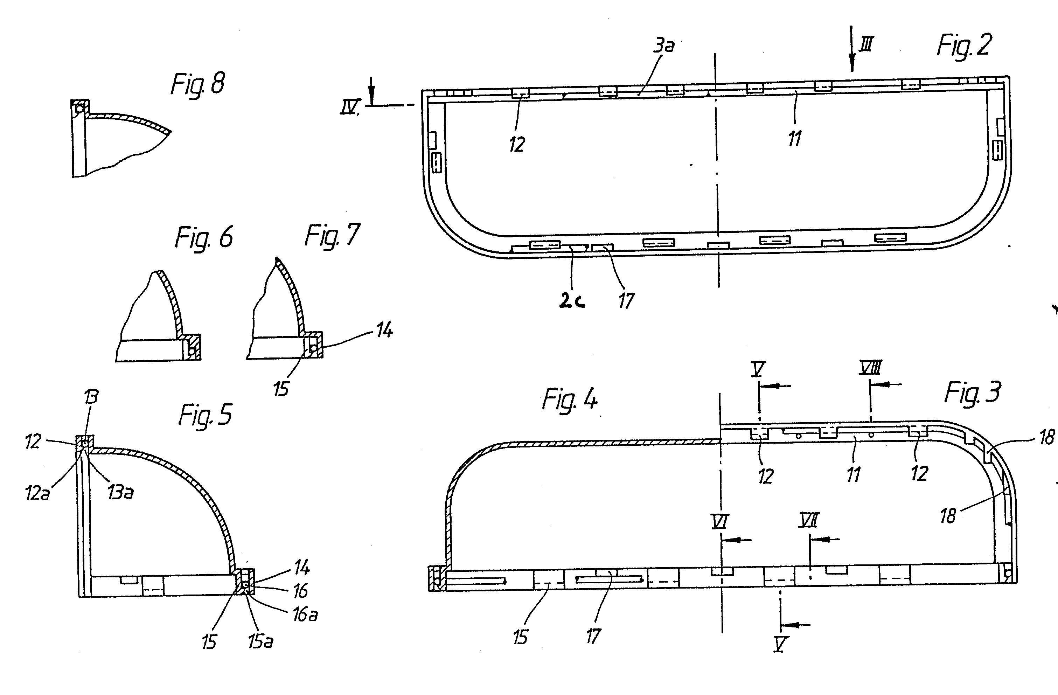

Die Schulterteile 10, dargestellt auf Fig. 2 bis 5, bestehen aus Kunststoff. Dachseitig und wandseitig ist ein Rand 11 bzw. 14 gebildet. Unter dem ebenen Teil des dachseitigen Randes sind Verbindungselemente angeformt, wie aus Figur 2 hervorgeht sechs Stück, die dazu dienen, mit dem Draht 3a eine eindrückbare Rastverbindung herzustellen. Durch die Verbindungsteile ist jeweils eine Nut 13 gebildet, die den Draht 3a von drei Seiten umgibt und unten eine Öffnung 13a aufweist, wo der Draht eingedrückt werden kann. An einer Seite wird die Nut durch einen elastischen Steg 12 begrenzt. An dem Steg ist ein Widerhaken 12a angeformt, der dafür sorgt, daß der in der Nut aufgenommene Draht nicht ohne weiteres wieder herausgezogen werden kann.

Im Prinzip die gleichen Verbindungselemente sind im Bereich des wandseitigen Randes 14 angeformt mit Stegen 15, an denen Widerhaken 15a gebildet sind und mit Nuten 16, die nach unten gerichtete Nutöffnungen 16a zum Eindrücken des Drahtes 2c aufweisen. Im Bereich des Randes 14 sind auch Anschläge 17, wo der Draht 2c unten anliegt.

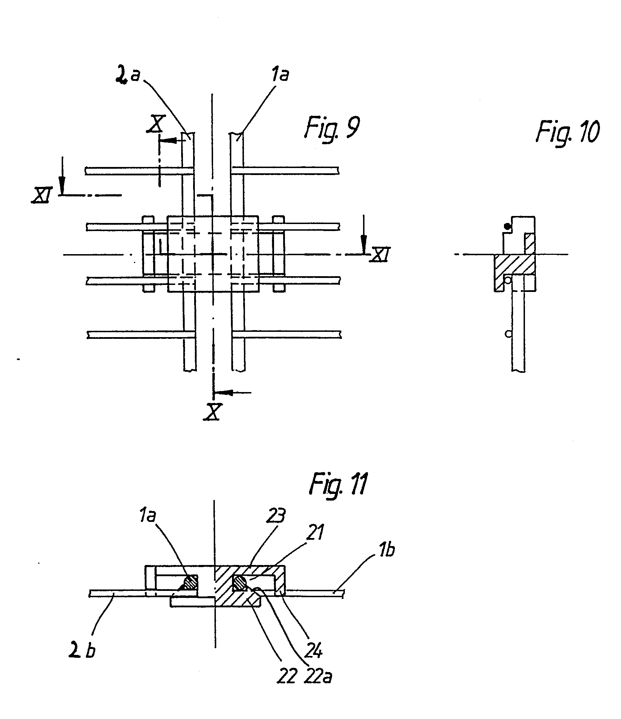

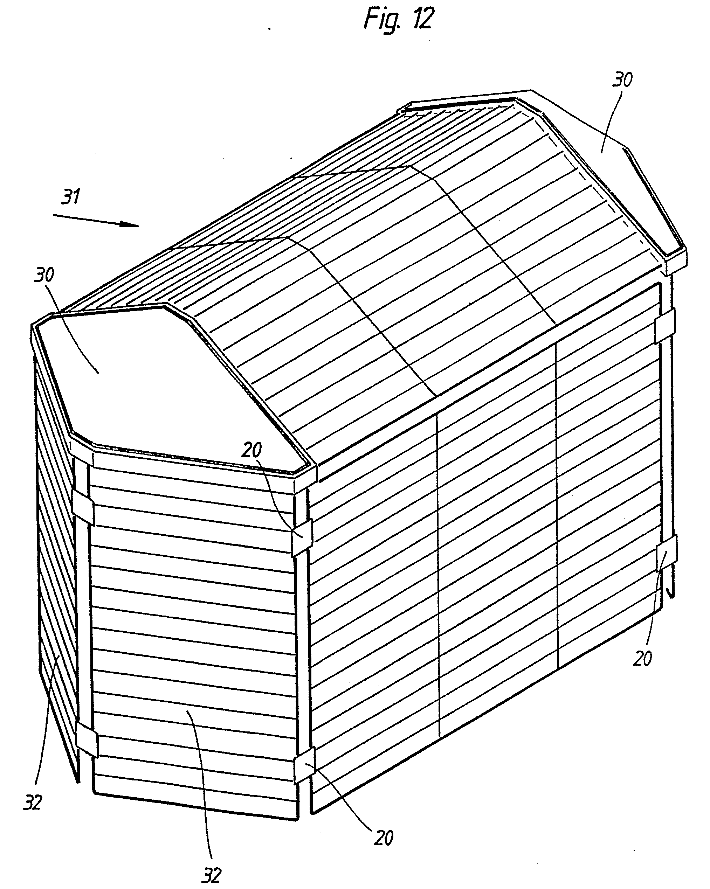

In dem Bereich des Randes 11, wo Krümmungen sind, wird der Draht 3a durch angeformte Stege 18 festgehalten. Bei dem einzelnen Verbindungsteil nach Fig. 9 bis 11 sind hinter einer Platte nebeneinander zwei Nuten 21 gebildet, wo jeweils ein Draht 1a und 2a aufgenommen wird. Damit man den Draht eindrücken kann, sind elastische Stege 22 und 23 vorgesehen mit Widerhaken 22a, damit der Draht nicht wieder herausgezogen werden kann. Jeder Nut ist gegenüber der Platte ein Steg 23 zugeordnet mit zwei Widerlagern 24, die jeweils zwei angeschlossene Drähte 1b und 2b abstützen.

Bei dem Drahtkorb nach Fig. 12 sind Schulterteile 30 vorgesehen zur Verbindung eines abgewinkelten Daches 31 mit zwei Wänden 32, die jeweils eben sind, jedoch in einer abgewinkelten Anordnung miteinander verbunden sind. In der Abwinklung werden die Wände jeweils durch einzelne Verbindungsteile verbunden in der Ausführung nach Fig. 9 bis 11, wobei jedoch das Verbindungsteil 20 der Abwinklung entsprechend eingestellt ist.

- 7 -

Patentansprüche

1. Aus Drahtgitterteilen zusammensetzbarer Vogelkäfig-
Drahtkorb, gekennzeichnet durch die nachfolgenden
Merkmale:

- er besteht aus zwei einander gegenüberliegenden
  ebenen Wänden (1), aus zwei gekrümmten oder abgewinkelten Wänden (2) und aus einem abgewinkelten
  oder gekrümmten Dach (3);

- für die Wände sind einzelne Verbindungsteile (20)
  aus Kunststoff vorgesehen, mit je zwei einen
  Draht umfassenden Nuten (21) je mit einer Einrastöffnung;

- es sind zwei vollwandige Schulterteile (10) aus
  Kunststoff vorgesehen, je mit einem an das Dach
  angeschlossenen Rand (11) und einem an die gekrümmte Wand angeschlossenen Rand (14);

- am Rand (14) sind Verbindungselemente angeformt, die jeweils einen Draht (2c) aufnehmen und Einrastöffnungen haben.

2. Vogelkäfig-Drahtkorb nach Anspruch 1, dadurch gekennzeichnet, daß die Einrastöffnungen nach unten gerichtet sind.

- 8 -

- 8 -

3. Vogelkäfig-Drahtkorb nach Anspruch 1, dadurch gekennzeichnet, daß die Nuten durch elastische Stege (22) mit Widerhaken (22a) begrenzt sind.

4. Vogelkäfig-Drahtkorb nach Anspruch 3, dadurch gekennzeichnet, daß der Draht (2c) auf angeformten Anschlagelementen (17) abgestützt ist.

5. Vogelkäfig-Drahtkorb nach Anspruch 1, dadurch gekennzeichnet, daß in einem ebenen Bereich des dachseitigen Randes (11) der Schulterteile einen Draht umfassende Verbindungselemente (12) mit einer nach unten zu gerichteten Einrastnut angeformt sind.

6. Vogelkäfig-Drahtkorb nach Anspruch 5, dadurch gekennzeichnet, daß in den Krümmungsbereichen des Randes (11) dem Draht an der Dachseite begrenzende Stege (18) angeformt sind.

7. Vogelkäfig-Drahtkorb nach Anspruch 1, dadurch gekennzeichnet, daß an den einzelnen Verbindungsteilen (20) beidseitig jeweils ein Steg (23) mit zwei die anschließenden Drähte (1b) abstützenden Widerlagern (24) angeformt sind.

0122338

- 7 -    (Ersatzblatt)

Patentansprüche

1.    Aus Drahtgitterteilen zusammensetzbarer Vogelkäfig-Drahtkorb mit folgenden Merkmalen:

- er besteht aus zwei gleichen einander gegenüberliegenden Wand-Gitterteilen, aus zwei weiteren gleichen einander gegenüberliegenden daran anschließenden Wand-Gitterteilen und aus einem Dach-Gitterteil;

- die Wand-Gitterteile sind durch clipsartige Verbindungsteile miteinander verbunden;

- an den Verbindungsteilen sind Nuten gebildet, die lotrechte Drähte der Wand-Gitterteile einsteckbar aufnehmen, und Widerlager für horizontale Drähte gekennzeichnet durch folgende weitere Merkmale:

- zur Verbindung des Daches (3) mit je einem Gitterteil (2), das an die ebenen Wände (1) anschließt, ist jeweils ein vollwandiges Schulterteil (10) vorgesehen.

Jedes Schulterteil hat einen gekrümmten dachseitigen Rand (11) mit einer Einstecknut (13), welche das gekrümmte Dach aufnimmt;

- jedes Schulterteil hat einen seitlichen Rand (14) mit einer Einstecknut (16), welche ein gekrümmtes Gitterteil (2) aufnimmt;

- in den Nuten sind jeweils Drähte der Gitterteile bzw. des Daches durch elastische Stege (12, 15) mit Widerhaken (12a, 15a) gehalten.

- 8 -

- 8 - (Ersatzblatt)

2. Aus Drahtgitterteilen zusammensetzbarer Vogelkäfig-Drahtkorb nach dem Oberbegriff des Anspruchs 1 gekennzeichnet durch folgende weitere Merkmale:

- zur Verbindung des Daches (31) mit je einem anschließenden Gitterteil ist jeweils ein vollwandiges Schulterteil (30) vorgesehen;

- das vollwandige Schulterteil (30) hat einen stumpf abgewinkelten dachseitigen Rand mit Einstecknut zur Aufnahme eines stumpf abgewinkelten Daches;

- das Schulterteil (30) hat einen stumpf abgewinkelten seitlichen Rand mit Einstecknut zur Aufnahme eines stumpf abgewinkelten anschließenden Wand-Gitterteils;

- das anschließende Wand-Gitterteil besteht aus zwei ebenen Seitenwänden (32), die durch Verbindungsteile (20) stumpfwinklig miteinander verbunden sind.

**Fig. 1**

Fig. 8

Fig. 6    Fig. 7

14

15

13

12

12a    13a

Fig. 5

14
16
16a

15    15a

Fig. 2

3a        III

IV.

12        11

2c    17

V        VIII

Fig. 4        Fig. 3

12    11    12

18

18

VI    VII

15    17

V

0122338

Fig. 9

Fig. 10

2a    1a

X    X

XI    XI

X

Fig. 11

1a    23    21    1b

2b    22 22a    24

Fig. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-1 225 142 (ESCAUT) <br> *Figuren 1-4; Seite 2, linke Spalte* | 1 | A 01 K 31/06 |
| Y | DE-A-2 842 698 (JÜSTL) <br> *Figuren 1-6,8; Seiten 13,15,16,19* | 1,2,5 | |
| A | DE-A-2 216 142 (VOSS) <br> *Figuren 1-7; Seiten 3-5* | 1,3,4 | |
|  | ----- | | |

RECHERCHIERTE SACHGEBIETE (Int. Cl. ³)

A 01 K

Der vorliegende Recherchenbericht wurde für alle Patentansprüche erstellt.

| Recherchenort <br> DEN HAAG | Abschlußdatum der Recherche <br> 09-12-1983 | Prüfer <br> VILBIG K |
|---|---|---|